# EUROPÄISCHE PATENTSCHRIFT

(11) **EP 3 385 338 B1**
(45) Veröffentlichungstag und Bekanntmachung des Hinweises auf die Patenterteilung: **06.05.2020**
(21) Anmeldenummer: 17165272.0
(22) Anmeldetag: 06.04.2017
(51) Int. Cl.: C09D 5/00

(54) **WÄSSRIGE BESCHICHTUNGSSTOFFE**
AQUEOUS COATING SUBSTANCES
MATÉRIAU DE REVÊTEMENT AQUEUX

(43) Veröffentlichungstag der Anmeldung: 10.10.2018
(73) Patentinhaber: DAW SE, 64372 Ober-Ramstadt (DE)
(72) Erfinder: Großkopf, Jan, 64367 Mühltal (DE); Seeger, Alexander, 64739 Höchst (DE); Westmeier, Johannes, 35112 Fonhausen (DE); Brenner, Thomas, 64367 Mühltal (DE)
(74) Vertreter: Metten, Karl-Heinz

(56) Entgegenhaltungen:
- WO-A1-01/53419
- WO-A1-2014/083102
- WO-A1-2015/193192
- DE-A1- 10 309 404
- DE-A1-102014 119 314

## Beschreibung

Die vorliegende Erfindung betrifft wässrige Dispersionsbeschichtungsstoffe, Ferner betrifft die Erfindung einen Farbanstrich auf einer Substratoberfläche, erhalten oder erhältlich durch ein- oder mehrmaliges Auftragen der erfindungsgemäßen Beschichtungsstoffe auf der Substratoberfläche, sowie die Verwendung der erfindungsgemäßen Beschichtungsstoffe als Farbe für den Innenraumbereich.

Anstrichfarben unterliegen einer fortwährenden Weiterentwicklung. Dies ist sich verändernden Kundenwünschen ebenso geschuldet wie dem Anspruch, dem Verbraucher möglichst kostengünstig qualitativ hochwertige Produkte zur Verfügung stellen zu können. Für Farbanstriche kann auf unterschiedlichste Beschichtungssysteme zurückgegriffen werden. Exemplarisch seien Silikatfarben, Dispersionssilikatfarben und Kunststoffdispersionsfarben genannt. Für diese Systeme finden sich in der DIN 18363:2016-09 entsprechende Definitionen.

Von Farbanstrichen wird häufig nicht nur verlangt, dass sie ein hohes Deckvermögen besitzen, sondern ebenfalls, dass sie über eine hohe mechanische Beständigkeit, beispielsweise gute Nassabriebbeständigkeit verfügen. Entsprechend hat es nicht an Versuchen gefehlt, zu entsprechend verbesserten Farbanstrich in zu gelangen.

Beispielsweise hatte sich schon die DE 102013020575 A1 die Aufgabe gestellt, Dispersionsfarben bereitzustellen, die bei einem reduzierten Gehalt an Titandioxid gleichwohl ein hohes Deckvermögen sowie eine gute Nassabriebbeständigkeit gewährleisten. Dies soll durch ein solches Beschichtungsmittel gelingen, enthaltend bezogen auf die Gesamtmenge des Beschichtungsmittels, 0,5 bis 30 Gew.-% Hohlteilchen, umfassend eine einen Hohlraum bildende äußere Schale und ein von der äußeren Schale zumindest teilweise umschlossenes inneres Material, wobei die äußere Schale einen Brechungsindex von 1,3 bis 2,5 und das innere Material einen Brechungsindex von 1,4 bis 3,2 aufzuweisen haben, und wobei das innere Material das Volumen des Hohlraums teilweise ausfüllt, 0,5 bis 40 Gew.-% mindestens eines filmbildenden Polymers sowie Wasser und/oder Lösemittel.

Hinreichend in Bezug auf Deckvermögen und Nassabrieb sollen gemäß der DE 10 2014 013 455 A1 solche Dispersionsfarben sein, die 2 bis 30% Polymerdispersion gerechnet als Feststoffanteil, 10 bis 60% Pigment und/oder Füllstoff, 0,5 bis 5% Siliconat als Additiv und zu 100% ergänzte Anteile an Wasser enthalten.

Gemäß der WO 2015/193192 A1weisen solche wässrigen Polymerisatdispersionen eine verbesserte Nassscheuerbeständigkeit auf, die durch radikalische wässrige Emulsionspolymerisation einer Monomermischung erhältlich sind, enthaltend 30 bis 70 Gew.-Teilen wenigstens eines Monomers, dessen Homopolymerisat eine Glasübergangstemperatur Tg < 25°C aufweist, 30 bis 70 Gew.-Teile wenigstens eines Monomers, dessen Homopolymerisat eine Glasübergangstemperatur Tg > 25°C aufweist, sowie c) 0,1 bis 5 Gew.-Teile wenigstens einer Verbindung enthaltend stabilisierende Gruppen und 0,05 bis 5 Gew.-Teile wenigstens eines copolymerisierbaren Monomers enthaltend eines oder mehrerer hydrolysierbare Silan-Monomere.

In DE 103 09 404 A1 wird eine konservierungsmittelfreie Dispersionsfarbe beschrieben, enthaltend 3 bis 18 Gew.-% Polymerdispersion (gerechnet als Feststoffanteil), 20 bis 60 Gew.-% Pigment und/oder Füllstoff und mehr als 2 bis 4,5 Gew.-% Wasserglas sowie zu 100 Gew.-% ergänzte Anteile an Wasser. Diese konservierungsmittelfreien Dispersionsfarbe sollen über ein hohes Deckvermögen verfügen. Gemäß den Ausführungen der DE 103 09 404 A1 konnte für eine Dispersionsfarbe enthaltend 2,0 Gew.-% anstelle von 3,0 Gew.-% Wasserglas sowie darüber hinaus jeweils 9,5 Gew.-% Polymerdispersionen (50%-ig) auf Basis von Styrolacrylaten, 20,0 Gew.-% Titandioxid, 30,0 Gew.-% Calciumcarbonat/Talkum, 1,5 Gew.-% an Additiven und Wasser eine geringe Ergiebigkeit und damit ein geringeres Deckvermögen festgestellt werden.

In der DE 103 09 404 A1 geht man davon aus, dass sich bei Verwendung von mehr als 2,0 Gew.-% bis 4,5 Gew.-% an Wasserglas kombiniert mit den erfindungsgemäß verwendeten Anteilen an Polymerdispersion und Pigmenten und/oder Füllstoffen diese Pigment- und Füllstoffpartikel derart anordnen und ausrichten, dass dadurch eine deutliche Verbesserung des Deckvermögens und somit eine höhere Ergiebigkeit erzielt werden kann.

Die DE 10 2014 119 314 A1 zeigt eine Zusammensetzung zur Beschichtung und/oder Abdichtung von Oberflächen, wobei die Zusammensetzung eine Epoxidharzkomponente, eine Härterkomponente, die mindestens eine thiolhaltige organische Verbindung aufweist, und eine in Wasser gelöste, emulgierte, dispergierte oder suspendierte Katalysatorkomponente aufweist, wobei die Epoxidharzkomponente und die Härterkomponente in der wässrigen Phase der Katalysatorkomponente emulgiert sind.

Die WO 2014/083102 A1 offenbart die Verwendung von anionischen Polymeren enthaltend Carboxylatgruppen, Sulfonatgruppen und/oder Sulfatgruppen, wobei die anionischen Polymere ausgewählt werden aus der Gruppe bestehend aus Salzen der Polymerisate ethylenisch ungesättigter Monomere, Salzen der Kondensate aus Formaldehyd und Naphthalinsulfonsäure und/oder Formaldehyd, Phenolsulfonsäure und Hamstoff, Ligninsulfonaten, Salzen der Carboxymethylcellulose und Mischungen hiervon als Antistatikum in Beschichtungsmittelzusammensetzungen.

Die WO 01/53419 A1 zeigt silikatische Beschichtungsmasse umfassend Wasserglas oder eine Mischung aus Wasserglas und Kieselsol, in dem/der das molare Verhältnis von Si0₂ zu Alkalioxid 5 bis 30 Mol Si0₂ pro Mol Alkalioxid beträgt, eine oder mehrere organische Ammoniumverbindung(en) und einen oder mehrere Füllstoff(e).

Es wäre nur wünschenswert, auf solche wässrigen Dispersionsbeschichtungsstoffe zurückgreifen zu können, die sich kostengünstig herstellen lassen und die sich gleichzeitig hinsichtlich Farbeindruck und mechanischer Beständigkeit durch einen nutzerfreundliches Eigenschaftsprofil auszeichnen. Demgemäß lag der vorliegenden Erfindung die Aufgabe zu Grunde, wässrige Dispersionsbeschichtungsstoffe zur Verfügung zu stellen, die nicht mehr mit den Nachteilen des Stands der Technik behaftet sind und die insbesondere über ein gutes Deckvermögen und/oder einen guten, dauerhaften Farbeindruck, ermittelt insbesondere anhand der Weiß- und/oder Gelbindex-Werte, und gegebenenfalls zusätzlich auch über eine zufriedenstellende Nassabriebbeständigkeit verfügen.

Demgemäß wurden wässrige Dispersionsbeschichtungsstoffe, gefunden, enthaltend a) organische Bindemittel, welche in Form einer wässrigen Dispersion auf Basis von Vinylacetat/Ethylen-Copolymeren, Copolymeren auf Basis von Vinylaromaten und Acrylaten und/oder Copolymeren auf Basis von Reinacrylaten vorliegen, in einer Menge im Bereich von 0,75 bis kleiner 4,0 Gew.-% (Feststoffanteil), b) Wasserglas und/oder Kieselsol in einer Menge im Bereich von 0,1 bis 2,0 Gew.-%, insbesondere im Bereich von 0,1 bis 1,75 Gew.-% (Feststoffanteil), und c) 15 bis 70 Gew.-% an mindestens einem Pigment und/oder mindestens einem Füllstoff, wobei die Beschichtungsstoffe einen pH-Wert im Bereich von 8,5 bis 12 aufweisen oder auf einen pH-Wert im Bereich 8,5 bis 12 eingestellt sind.

Beschichtungsstoffe im Sinne der vorliegenden Erfindung sollen Zusammensetzungen gemäß DIN EN ISO 4618:2015-01 umfassen. Hierunter fallen insbesondere Anstrichstoffe wie Dispersionsfarben und Spachtelmassen.

Die erfindungsgemäßen Beschichtungsstoffe enthalten neben den genannten Pigmenten und/oder Füllstoffen das organische Bindemittel und Wasserglas und/oder Kieselsol als zwingende Komponenten.

In den erfindungsgemäßen Beschichtungsstoffen liegt in einer zweckmäßigen Ausgestaltung das organische Bindemittel a) in einer Menge im Bereich von von 1,0 bis kleiner 4,0 Gew.-% und bevorzugt 1,0 bis 3,8 Gew.-% vor.

Mit den genannten Bindemittelanteilen lässt sich mit den erfindungsgemäßen Beschichtungsstoffen stets ein für Innen- wie auch Außenanwendung völlig ausreichender geringer Nassabrieb erhalten. Ferner liegt alternativ oder zusätzlich in einer weiteren zweckmäßigen Ausgestaltung das Wasserglas und/oder Kieselsol in einer Menge im Bereich von 0,2 bis 1,50

Gew.-%. Auch kann erfindungsgemäß vorgesehen sein, dass die Menge an Wasserglas und/oder Kieselsol im Bereich von 0,2 bis 1,5 Gew.-% und besonders bevorzugt im Bereich von 0,3 bis 1,25 Gew.-% liegt. Für viele Anwendungen hat sich gezeigt, dass sich schon mit einer Menge von 0,1 Gew.-%, vorzugsweise von 0,25 Gew.-%, (Feststoffanteil) an Wasserglas mit den erfindungsgemäßen Beschichtungsstoffen ein hinreichendes Deckvermögen erhalten lässt.

Unter Deckvermögen (auch Kontrastverhältnis genannt) wird im Allgemeinen die Fähigkeit eines Beschichtungsstoffes verstanden, die Farbe oder die Farbunterschiede eines Untergrundes zu verdecken. Das Deckvermögen wird im Sinne der Erfindung nach der VdL-Richtlinie Nr. 09 des Verbands der deutschen Lackindustrie e.V. (Ausgabe Juli 2002) unter Rückgriff auf DIN ISO 6504-3:2007-05 und (zu Klassifizierungszwecken) in Verbindung mit DIN EN 13300 (November 2002), insbesondere Ziffer 5.4., ermittelt.

Wasserglas kann z.B. durch Reaktion von Alkalikarbonat und/oder Alkalihydroxyd mit Quarzsand erhalten werden. Es liegt üblicherweise in Form wässriger Lösungen vor. Diese können über unterschiedliche Konzentrationen verfügen. Kieselsole liegen regelmäßig in Form wässriger Suspensionen vor.

Technische Bedeutung haben im Allgemeinen Natrium- und Kaliumwasserglas sowie Lithiumwasserglas. Für die erfindungsgemäßen Beschichtungsstoffe greift man bevorzugt auf Kaliumwasserglas zurück.

Das organische Bindemittel a) liegt in den erfindungsgemäßen Dispersionsbeschichtungsstoffen in Form einer wässrigen Dispersion auf Basis von Vinylacetat/EthylenCopolymeren, Copolymeren auf Basis von Vinylaromaten, insbesondere Styrol, und Acrylaten und/oder Copolymeren auf Basis von Reinacrylaten, insbesondere auf Basis von Styrolacrylatcopolymeren vor. Demgemäß kommen als organische Bindemittel für die erfindungsgemäßen wässrigen Beschichtungsstoffe Vinylacetat/Ethylen-Copolymere, Copolymere auf Basis von Vinylaromaten, insbesondere Styrol, und Acrylaten oder auf Basis von Reinacrylaten, insbesondere auf der Basis von Reinacrylaten in Betracht. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Das organische Bindemittel wird in einer zweckmäßigen Ausgestaltung in Form einer wässrigen Bindemitteldispersion eingesetzt. Demgemäß kommen als organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und Vinylestern mindestens einer Koch-Säure, insbesondere der Versatinsäure, oder Vinylaromaten, insbesondere Styrol.

Unter den Begriff der organischen Bindemittel fallen im Sinne der Erfindung auch Dispersionen auf Basis der zuvor genannten Polymere und Copolymere, jedoch enthaltend darin einpolymerisiert a) mindestens ein Monomer mit mindestens einem hydrolysierbaren Silan als funktioneller Gruppe, wobei diese funktionelle Gruppe nicht kettenverlängernd an der Polymerisationsreaktion teilnimmt, und/oder b) mindestens ein Monomer mit mindestens einer Hydroxygruppe als funktioneller Gruppe, wobei diese funktionelle Gruppe nicht kettenverlängernd an der Polymerisationsreaktion teilnimmt. Ferner umfassen organische Bindemittel insbesondere auch hybride Bindemittel. Unter hybride Bindemittel im Sinne der vorliegenden Erfindung fallen auch Reaktionsprodukte gebildet aus mindestens einem organischen Bindemittel ausgewählt aus der Gruppe der vorangehend genannten organischen Bindemittel, enthaltend in die Polymere und Copolymere einpolymerisiert a) mindestens ein Monomer mit mindestens einem hydrolysierbaren Silan als funktioneller Gruppe, wobei diese funktionelle Gruppe nicht kettenverlängernd an der Polymerisationsreaktion teilnimmt, und/oder b) mindestens ein Monomer mit mindestens einer Hydroxygruppe als funktioneller Gruppe, wobei diese funktionelle Gruppe nicht kettenverlängernd an der Polymerisationsreaktion teilnimmt, und Kieselsol und/oder Wasserglas, insbesondere Wasserglas. Ohne an eine Theorie gebunden zu sein, wird vermutet, dass die hydrolysierbare Silangruppe a) und/oder die Hydroxygruppe b) eine Kondensationsreaktion mit den funktionellen Gruppen des Kieselsols und/oder Wasserglases eingehen.

Exemplarisch seien als geeignete Pigmente anorganische Pigmente wie Bunt-, Schwarz- und Weißpigmente (Farbpigmente) sowie Glanzpigmente und organische Pigmente wie Bunt- und Schwarzpigmente genannt. Als geeignete anorganische Weißpigmente kommen zum Beispiel Titandioxid, Zinkweiß, Farbenzinkoxid; Zinksulfid und/oder Lithopone und/oder Ettringit in Betracht. Unter den anorganischen Schwarzpigmenten kann zum Beispiel ausgewählt werden unter Eisenoxidschwarz, Eisen-Mangan-Schwarz, Spinellschwarz und/oder Ruß. Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktintant, Chromorange, Cersulfid, Eisenoxidgelb, Nickeltitangelb, Chromtitangelb, Spinellphasen, Chromgelb und/oder Bismutvanadat.

Geeignete organische Pigmente können hierbei z.B. ausgewählt werden aus der Gruppe bestehend aus Monoazopigmenten, Diazopigmenten, Diazokondensationspigmenten, Anthrachinonpigmenten, Anthrapyrimidinpigmenten, Chinacridonpigmenten, Diketopyrrolopyrrolpigmenten, Dioxazinpigmenten, Flavanthronpigmenten, Indanthronpigmenten, Isoindolinpigmenten, Isoindolinonpigmenten, Isoviolanthronpigmenten, Metallkomplexpigmenten, Perinonpigmenten, Perylenpigmenten, Phtalocyaninpigmenten, Pyranthronpigmenten, Pyrazolochinazolonpigmenten, Thioindigopigmenten, Triarylcarboniumpigmenten und deren beliebigen Mischungen. Exemplarisch seien als geeignete organische Pigmente Bunt- und Schwarzpigmente genannt. Als geeignete organischen Buntpigmente kann zum Beispiel zurückgegriffen werden auf C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

Besonders geeignete Pigmente umfassen zum Beispiel Titandioxid, Zinksulfid, Zinkoxid, Baryt, Ruß, Eisenoxid, Chromoxid, Kobaltblau, Phtalocyaninpigment, Spinellpigment, Nickeltitanat, Chromtitanat und deren beliebige Mischungen.

Grundsätzlich können geeignete Füllstoffe ausgewählt werden aus der Gruppe bestehend aus Silikaten, Karbonaten, Flußspat, Sulfaten, Oxiden und deren beliebige Mischungen. Exemplarisch seien calcitische Füllstoffe, insbesondere Calciumcarbonate, Dolomite, Calcite und/oder Aragonite, silikatische Füllstoffe, insbesondere Quarzite, Schichtsilikate, Feldspate, Vulkanite und/oder Kieselerden wie Kieselgur und Diatomeenerden, sulfatische Füllstoffen, insbesondere Bariumsulfat, und chemisch modifizierte Füllstoffe genannt.

Das mindestens eine Pigment und/oder der mindestens eine Füllstoff c) liegen in den erfindungsgemäßen Beschichtungsstoffen in einer zweckmäßigen Ausgestaltung in einer Menge im Bereich von 20 bis 70 Gew.-%, vorzugsweise im Bereich von 25 bis 70 Gew.-% und besonders bevorzugt im Bereich von 30 bis 60 Gew.-%, vor.

Die erfindungsgemäßen Beschichtungsstoffe weisen in einer bevorzugten Ausgestaltung einen pH-Wert im Bereich von 8,5 bis 12, vorzugsweise im Bereich von 9 bis 11,5 auf oder werden auf einen pH-Wert im Bereich von 8,5 bis 12, vorzugsweise im Bereich von 9 bis 11,5, eingestellt. Die Einstellung des pH-Wertes kann durch das zugesetzte Wasserglas und/oder Kieselsol erfolgen. Gegebenenfalls können auch Alkali- und/oder Erdalkalihydroxide, z.B. KOH, Ammoniak und/oder Aminverbindungen, vorzugsweise in Form wässriger Lösungen, zugegeben werden. Demgemäß können die erfindungsgemäßen Beschichtungsstoffe ferner mindestens ein Alkali- und/oder Erdalkalihydroxid, Ammoniak und/oder eine Aminverbindung (Komponente d)) aufweisen. Geeignete Aminverbindungen umfassen z.B. auch Aminoalkohole. Überraschend wurde gefunden, dass diese Aminoalkohole in den erfindungsgemäßen wässrigen Beschichtungsstoffen auch eine stabilisierende Wirkung ausüben können. Sie können in den erfindungsgemäßen Beschichtungsstoffen darüber hinaus beispielsweise auch als Neutralisationsmittel und/oder als Dispergiermittel eingesetzt werden. Exemplarisch seien als bevorzugte Aminoalkohole 2-Amino-2-methyl-1-propanol, 2-Amino-2-ethyl-1,3-propandiol, N,N,N',N'-Tetrakis(2-hydroxypropyl)-ethylendiamin und deren Mischungen sowie Polyhydroxyamine, insbesondere Polyhydroxyamine, bei denen die Polyhydroxy-Einheit auf einer Hexose, vorzugsweise Glukose, basiert, genannt. Besonders geeignete Polyhydroxyamine umfassen Alkylglukamine, insbesondere tertiäre Alkylglukamine wie Dimethylglukamin, Hydroxyethyl- und Hydroxypropyl-N-Methylglukamin sowie deren Mischungen. Selbstverständlich können auch beliebige Mischungen an Polyhydroxyaminen, insbesondere den bevorzugten Polyhydroxyaminen, und 2-Amino-2-methyl-1-propanol, 2-Amino-2-ethyl-1,3-propandiol und/oder N,N,N',N'-Tetrakis(2-hydroxypropyl)-ethylendiamin eingesetzt werden. Unter den Aminoalkoholen wird bevorzugt auf 2-Amino-2-methyl-1-propanol, 2-Amino-2-ethyl-1,3-propandiol und/oder N,N,N',N'-Tetrakis(2-hydroxypropyl)-ethylendiamin zurückgegriffen.

Die erfindungsgemäßen Beschichtungsstoffe können ferner ausgestattet sein mit e) mindestens einem Rheologieadditiv, insbesondere Verdickern, und/oder f) mindestens einem Alkylalkoxysilan, Alkylalkoxysiloxan, wasserlöslichen Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon, sowie gegebenenfalls g) mindestens einem Chelatbildner (auch Komplexbildner genannt) und/oder h) gegebenenfalls mit mindestens einem Additiv. Als geeignete Komplexbildner bzw. Chelatbildner seien genannt Ethylendiamintetraessigsäure (EDTA), Diethylentriaminpentaessigsäure (DTPA), Nitrilotriessigsäure Hydroxyethylethylendiamintriessigsäure, Aminopolycarbonsäuren, insbesondere enthaltend eine oder mehrere Aminogruppen und zwei oder mehr Carbonsäuregruppen, und Polyphosphonsäuren, z.B. Phosphonopolycarbonsäuren wie 2-Phosphonobutan-1,2,4-tricarbonsäure, sowie deren beliebige Mischungen.

Als Additive können grundsätzlich herkömmliche Additive, wie sie für wässrige Beschichtungsstoffe zum Einsatz kommen, eingesetzt werden. Exemplarisch können geeignete Additive ausgewählt sein aus der Gruppe bestehend aus mindestens einem Netz- und/oder Dispergiermittel, Entschäumern, Stabilisatoren, Flammschutzmitteln, Hydrophobierungsmitteln, Mattierungsmitteln, insbesondere Fällungskieselsäure, Schichtsilikaten, organisch modifizierten Schichtsilikaten und/oder thixotropen Alkydharzen, Oberflächenadditiven, insbesondere Silikonoberflächenadditiven, beispielsweise polyethermodifiziertes Polymethylalkylsiloxan und/oder Silikonpolyether-Copolymere, Puffersubstanzen, UV-Absorbern, Radikalfängern und Mischungen dieser Verbindungen. Die erfindungsgemäßen wässrigen Beschichtungsstoffe enthalten als Additive vorzugsweise mindestens einen Verdicker und/oder einen Entschäumer. Besonders bevorzugt liegen in den erfindungsgemäßen wässrigen Beschichtungsstoffen sowohl Verdicker wie auch Entschäumer vor.

Die genannten Additive liegen in einer bevorzugten Ausgestaltung in den erfindungsgemäßen wässrigen Beschichtungsstoffen in einer Menge im Bereich von 0,001 bis 4 Gew.-%, vorzugsweise im Bereich von 0,01 bis 3 Gew.-% und besonders bevorzugt im Bereich von 0,1 bis 2 Gew.-% vor, jeweils bezogen auf den Feststoffanteil bzw., sofern diese Additive bei Raumtemperatur nicht als Feststoff vorliegen sollten, auf den nicht-wässrigen Wirkstoffanteil dieser Additivkomponenten.

Geeignete Verdicker können ausgewählt werden aus der Gruppe bestehend aus Polyacrylat-Verdickern, Polyurethan-Verdickem, Polyharnstoff-Verdickern, Cellulose-Verdickem, insbesondere Hydroxyethylcellulose und/oder Methylcellulose, Polyvinylalkohol-Verdickern, Polyetherpolyol-Verdickem, Polysaccharid-Verdickern, insbesondere Xanthan und/oder Agar Agar, und beliebigen Mischungen hiervon.

Geeignete Verdickersysteme können auch auf der kombinierten Verwendung von Schichtsilikaten, insbesondere organisch modifizierten Schichtsilikaten, und Polyurethan-Verdickern basieren.

In einer weiteren bevorzugten Ausfuhrungsform kann vorgesehen sein, dass die erfindungsgemäßen Beschichtungsstoffe i) 0,5 bis kleiner 4,0 Gew.-%, insbesondere 1,0 bis 3,8 Gew.-% Polymerdispersion (Komponente a)), ii) 0 bis 20 Gew.-%, insbesondere 2,0 bis 15 Gew.-% Pigmente (Komponente c)), iii) 15 bis 70 Gew.-%, insbesondere 20 bis 65 Gew.-% Füllstoffe (Komponente c)) und/oder iv) 0,1 bis 2,0 Gew.-%, insbesondere 0,2 bis 1,25 Gew.-% Wasserglas (Komponente b)) sowie v) zu 100 Gew.-% ergänzte Anteile an Wasser enthalten.

Die erfindungsgemäßen wässrigen Beschichtungsstoffe zeichnen sich insbesondere auch dadurch aus, dass sie im Wesentlichen frei von Konservierungsmitteln sein können. Hierbei ist von besonderem Vorteil, dass diese Beschichtungsstoffe auch ohne jegliche organische biozide Konservierungsmittel über längeren Zeitraum keinen Pilz- und/oder bakteriellen Befall zeigen. Es ist mit den erfindungsgemäßen Beschichtungsstoffen demgemäß nicht mehr zwingend erforderlich, auf Topf- und/oder Filmkonservierungsmittel zurückgreifen zu müssen.

Die erfindungsgemäßen Beschichtungsstoffe eignen sich zum Beispiel als Fassaden- oder Innenraumfarbe.

Die der Erfindung zu Grunde liegende Aufgabe wird des Weiteren gelöst durch einen Farbanstrich auf einer Substratoberfläche, erhalten oder erhältlich durch ein- oder mehrmaliges Auftragen der erfindungsgemäßen Beschichtungsstoffe auf der Substratoberfläche. Demgemäß sind die erfindungsgemäßen Dispersionsbeschichtungsstoffen als Farbe für den Innenraumbereich geeignet.

Mit den erfindungsgemäßen wässrigen Beschichtungsstoffen gelingt ein relativ kostengünstiger Zugang zu Farbanstrichen, die sich durch ein hohes Deckvermögen und eine gute Nassabriebbeständigkeit auszeichnen. Die mit den erfindungsgemäßen Beschichtungsstoffen erhaltenen Beschichtungen sind zudem regelmäßig mit einem verbesserten, d.h. höherem Weißindex und auch einem geringen Gelbindex ausgestattet.

Die beiden Messgrößen Weißindex und Gelbindex wurden gemäß ASTM E 313:2015 bestimmt. Für die Ermittlung des Nassabriebs wurde auf die Norm DIN EN ISO 11998:2006-10 in Verbindung mit DIN EN 13300 (November 2002) zurückgegriffen.

Die Erfindung wird durch die nachfolgenden, beispielhaften Zusammensetzungen beschrieben, die jedoch keine Limitierung der Erfindung darstellen. Der Fachmann auf dem Gebiet kann, basierend auf der vorliegenden Beschreibung sowie seinem allgemeinen Fachwissen, weitere Ausführungsformen der Erfindung ausarbeiten, ohne erfinderisch tätig werden zu müssen Alle Angaben erfolgen in Gewichtsprozent. Sofern wasser- und/oder lösemittelhaltige Zubereitungen zum Einsatz kamen, bezieht sich die Angabe auf den Festkörperanteil dieser Zubereitung.

In den Ausführungsbeispielen 1.2, 1.3 und 1.4, sowie 2.2, 2.3 und 2.4, wurde, ausgehend von den Vergleichsbeispielen 1.1 und 2.1, exemplarisch organisches Bindemittel im Wesentlichen festkörpergleich schrittweise durch anorganisches Bindemittel ersetzt. Überrasehend wurde hierbei gegenüber Anstrichen, die sich ausschließlich eines organischen Bindemittels bedienten, ein verringerter Nassabrieb bei gleichzeitig verbessertem Deckvermögen gefunden, und zwar ohne sogleich die Menge an Pigment und/oder Füllstoff zu erhöhen.

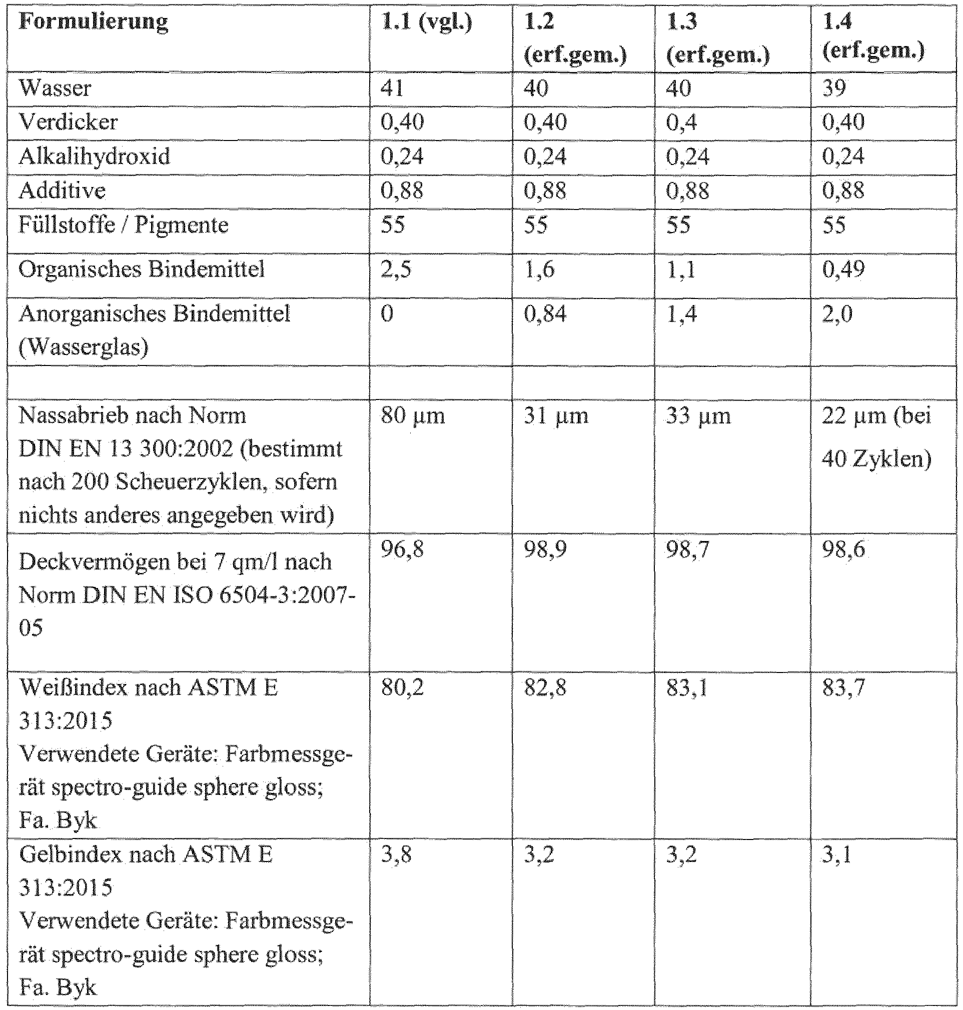

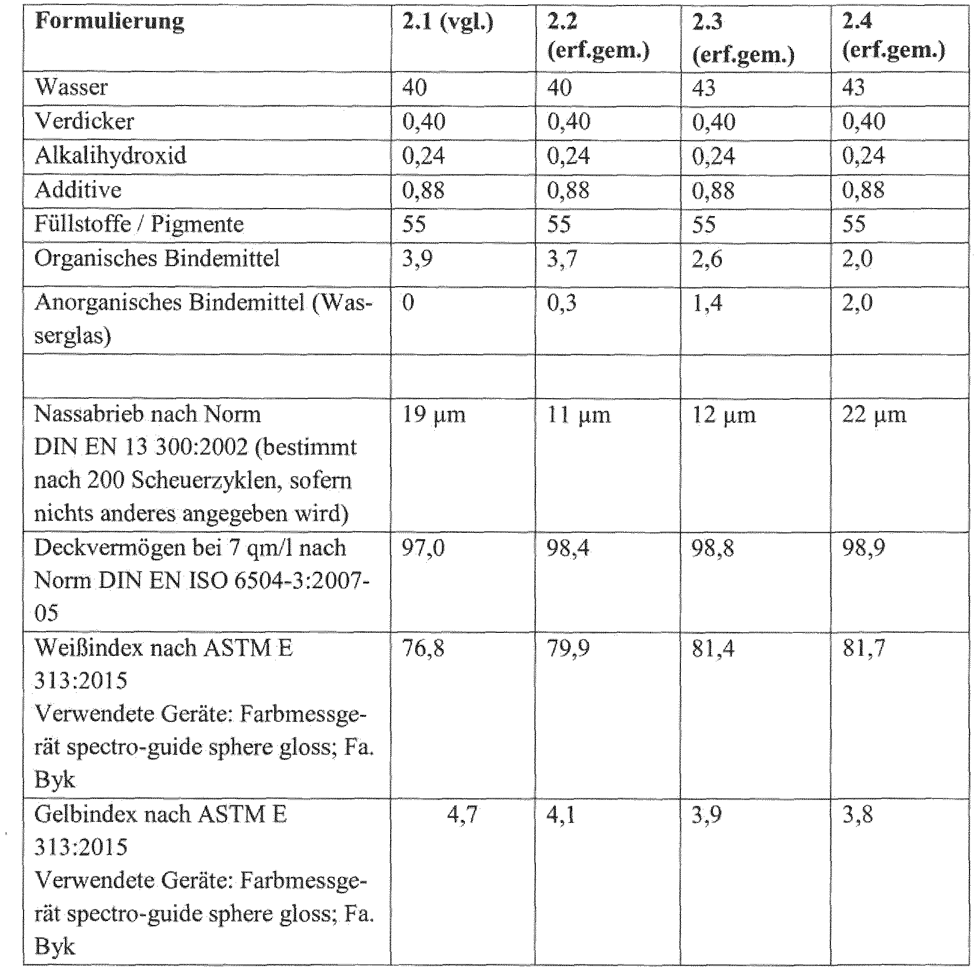

In den Beispielen 3.1, 3.2, 3.3 und 3.4 wurden exemplarisch organisches Bindemittel im Wesentlichen festkörpergleich schrittweise durch den Füllstoff Calciumcarbonat ersetzt. Ausgangspunkt war die Zusammensetzung gemäß Vergleichsbeispiel 1.1. Diese entspricht der Zusammensetzung gemäß Vergleichsbeispiel 3.1. Hierbei führte erwartungsgemäß der im Wesentlichen festkörpergleiche schrittweise Austausch von organischem Bindemittel gegen Füllstoff (hier Calciumcarbonat) nur zu einer geringfügigen, und im Wesentlichen linearen Erhöhung des Deckvermögens. Gleichzeitig erhöhte sich der Nassabrieb im Wesentlichen linear. Demgegenüber lässt sich mit den erfindungsgemäßen Beschichtungsstoffen eine verbesserte, im Wesentlichen nicht-lineare Erhöhung des Deckvermögens bei im Wesentlichen festkörpergleichem schrittweisen Austausch von organischem Bindemittel gegen Wasserglas erzielen. Gleichzeitig tritt keine lineare negative Veränderung des Nassabriebs ein.

| **Formulierung** | **3.1 (vgl.)** | **3.1 (vgl.)** | **3.1 (vgl.)** | **3.1 (vgl.)** |
|---|---|---|---|---|
| Wasser | 41 | 40 | 40 | 39 |
| Verdicker | 0,40 | 0,40 | 0,4 | 0,40 |
| Alkalihydroxid | 0,24 | 0,24 | 0,24 | 0,24 |
| Additive | 0,88 | 0,88 | 0,88 | 0,88 |
| Füllstoffe / Pigmente | 55 | 55 | 55 | 55 |
| Organisches Bindemittel | 2,5 | 1,6 | 1,1 | 0,49 |
| Füllstoff (Calciumcarbonat) | 0 | 0,84 | 1,4 | 2,0 |
| Anorganisches Bindemittel (Wasserglas) | 0 | 0 | 0 | 0 |
| | | | | |
| Nassabrieb nach Norm DIN EN 13 300:2002 (bestimmt nach 40 Scheuerzyklen,) | 13 µm | 35 µm | 53 µm | 70 µm |
| Deckvermögen bei 7 qm/l nach Norm DIN EN ISO 6504-3:2007-05 | 96,8 | 97,3 | 97,4 | 97,9 |
| Weißindex nach ASTM E 313:2015 | 80,2 | 81,7 | 82,4 | 83,1 |
| Verwendete Geräte: Farbmessgerät spectro-guide sphere gloss, Fa. Byk | | | | |
| Gelbindex nach ASTM E 313:2015 | 3,8 | 3,5 | 3,4 | 3,2 |
| Verwendete Geräte: Farbmessgerät spectro-guide sphere gloss; Fa.Byk | | | | |

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässrige Dispersionsbeschichtungsstoffe, enthaltend
a) organische Bindemittel, welche in Form einer wässrigen Dispersion auf Basis von Vinylacetat/Ethylen-Copolymeren, Copolymeren auf Basis von Vinylaromaten und Acrylaten und/oder Copolymeren auf Basis von Reinacrylaten vorliegen, in einer Menge im Bereich von 0,75 bis kleiner 4,0 Gew.-% (Feststoffanteil),
b) Wasserglas und/oder Kieselsol in einer Menge im Bereich von 0,1 bis 2,0 Gew,-%, insbesondere im Bereich von 0,1 bis 1,75 Gew.-%, (Feststoffanteil) und
c) 15 bis 70 Gew.-% an mindestens einem Pigment und/oder mindestens einem Füllstoff,
wobei die Beschichtungsstoffe einen pH-Wert im Bereich von 8,5 bis 12 aufweisen oder auf einen pH-Wert im Bereich von 8,5 bis 12 eingestellt sind.

2. Beschichtungsstoffe nach Anspruch 1, enthaltend
das organische Bindemittel a) in einer Menge im Bereich von 1,0 bis kleiner 4,0 Gew.-% und bevorzugt 1,0 bis 3,8 Gew.-% und/oder
das Wasserglas und/oder Kieselsol in einer Menge im Bereich von 0,2 bis 1,5 Gew.-%.

3. Beschichtungsstoffe nach Anspruch 1 oder 2, **dadurch gekennzeichnet, dass** die Copolymere auf Basis von Vinylaromaten und Acrylaten Styrolacrylatcopolymere darstellen und/oder dass das organische Bindemittel a) und Wasserglas und/oder Kieselsol in Form eines hybriden Bindemittels vorliegen.

4. Beschichtungsstoffe nach einem der vorangehenden Ansprüche, enthaltend das mindestens eine Pigment und/oder den mindestens einen Füllstoff c) in einer Menge im Bereich von 20 bis 70 Gew.-%, vorzugsweise im Bereich von 25 bis 70 Gew.-% und besonders bevorzugt im Bereich von 30 bis 60 Gew.-%.

5. Beschichtungsstoffe nach einem der vorangehenden Ansprüche, **dadurch gekennzeichnet, dass**
diese einen pH-Wert im Bereich von 8,5 bis 12, vorzugsweise im Bereich von 9 bis 11,5, aufweisen oder auf einen pH-Wert im Bereich von 8,5 bis 12, vorzugsweise im Bereich von 9 bis 11,5, eingestellt sind.

6. Beschichtungsstoffe nach einem der vorangehenden Ansprüche, ferner enthaltend d) mindestens ein pH-Wert-Einstellmittel, insbesondere ausgewählt aus der Gruppe bestehend aus Alkalihydroxiden, Erdalkalihydroxiden, Ammoniak, Aminverbindungen und beliebigen Mischungen hiervon,
e) mindestens einem Rheologieadditiv, insbesondere Verdickern,
f) mindestens ein Alkylalkoxysilan, Alkylalkoxysiloxan, wasserlösliches Alkylsilikonat, insbesondere Kaliummethylsilikonat, Monoalkylsilantriol, Dialkylsilandiol, Triafkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon und
g) gegebenenfalls mindestens einen Chelatbildner und/oder
h) gegebenenfalls mindestens ein Additiv.

7. Beschichtungsstoffe nach Anspruch 6, **dadurch gekennzeichnet, dass** das mindestens eine Additiv h) ausgewählt ist aus der Gruppe bestehend aus mindestens einem Netz- und/oder Dispergiermittel, Entschäumern, Stabilisatoren, Flammschutzmitteln, Hydrophobierungsmitteln, Mattierungsmitteln, insbesondere Fällungskieselsäure, Schichtsilikaten, organisch modifizierten Schichtsilikaten und/oder thixotropen Alkydharzen, Oberflächenadditiven, insbesondere Silikonoberflächenadditiven, beispielsweise polyethermodifiziertes Polymethylalkylsiloxan und/oder Silikonpolyether-Copolymere, Puffersubstanzen, UV-Absorbern, Radikalfängern und Mischungen dieser Verbindungen.

8. Beschichtungsstoffe nach Anspruch 6 oder 7, **dadurch gekennzeichnet, dass** der Verdicker ausgewählt ist aus der Gruppe bestehend aus Polyacrylat-Verdickern, Polyurethan-Verdickern, Polyharnstoff-Verdickern, Cellulose-Verdickern, insbesondere Hydroxymethylcellulose und/oder Methylcellulose, Polyvinylalkohol-Verdickern, Polyetherpolyol-Verdickern, Schichtsilikat-Verdicker, Polysaccharid-Verdickern, insbesondere Xanthan, und beliebigen Mischungen hiervon.

9. Beschichtungsstoffe nach einem der vorangehenden Ansprüche, **dadurch gekennzeichnet, dass**
diese im Wesentlichen frei von Konservierungsmitteln, vorzugsweise frei von organischen bioziden Konservierungsmitteln, besonders bevorzugt frei von Topf- und/oder Filmkonservierungsmitteln sind.

10. Beschichtungsstoffe nach einem der vorangehenden Ansprüche, **dadurch gekennzeichnet, dass**
die Pigmente ausgewählt sind aus der Gruppe bestehend aus Titandioxid, Zinksulfid, Zinkoxid, Baryt, Ruß, Eisenoxid, Chromoxid, Kobaltblau, Phtalocyaninpigmenten, Spinellpigmenten, Nickel- und Chromtitanat sowie einer beliebigen Mischung hiervon.

11. Beschichtungsstoffe nach einem der vorangehenden Ansprüche, **dadurch gekennzeichnet, dass**
die Füllstoffe ausgewählt sind aus der Gruppe bestehend aus Silikaten, Karbonaten, Flußspat, Sulfaten und Oxiden.

12. Beschichtungsstoffe nach einem der vorangehenden Ansprüche, **dadurch gekennzeichnet, dass**
das Wasserglas ausgewählt ist aus der Gruppe bestehend aus Natrium-, Kalium-, Lithiumwasserglas und beliebigen Mischungen hiervon.

13. Beschichtungsstoffe nach einem der vorangehenden Ansprüche, enthaltend
i) 0,5 bis kleiner 4,0 Gew.-%, insbesondere 1,0 bis 3,8 Gew.-% Polymerdispersion,
ii) 0 bis 20 Gew,-%, insbesondere 2,0 bis 15 Gew.-% Pigmente,
iii) 15 bis- 70 Gew.-%, insbesondere 20 bis 65 Gew.-% Füllstoffe,
iv) 0,1 bis 2,0 Gew.-%, insbesondere 0,2 bis 1,25 Gew.-% Wasserglas sowie
v) zu 100 Gew.-% ergänzte Anteile an Wasser.

14. Beschichtungsstoffe nach einem der vorangehenden Ansprache, **dadurch gekennzeichnet, dass**
diese eine Fassaden- oder Innenraumfarbe darstellen.

15. Beschichtungsstoffe nach einem der Ansprüche 6 bis 14, **dadurch gekennzeichnet, dass**
das pH-Einstellmittel einen pKs-Wert großer oder gleich 9,0, insbesondere größer oder gleich 10, aufweist und/oder dass das Dispergiermittel mindestens einen Aminoalkohol umfasst oder darstellt.

16. Farbanstrich, insbesondere Dispersionsfarbanstrich, auf einer Substratoberfläche, erhalten oder erhältlich durch ein- oder mehrmaliges Aufträgen der Beschichtungsstoffe nach einem der vorangehenden Ansprüche auf der Substratoberfläche.

17. Verwendung der Beschichtungsstoffe, insbesondere der DispersionsbeschichtungsStoffe, nach einem der Ansprüche 1 bis 15 als Farbe für den Innenraumbereich.

## Claims

1. Aqueous dispersion coating substances, containing
a) organic binders which are present in the form of an aqueous dispersion based on vinyl acetate/ethylene copolymers, copolymers based on vinyl aromatic compounds and acrylates and/or copolymers based on pure acrylates, in a quantity in the range of 0.75 to less than 4.0 % by weight (solids content),
b) water glass and/or silica sol in a quantity in the range of 0.1 to 2.0 % by weight, in particular in the range of 0.1 to 1.75 % by weight (solids content), and
c) 15 to 70 % by weight of at least one pigment and/or at least one filler,
wherein the coating substances have a pH value in the range of 8.5 to 12 or are adjusted to a pH value in the range of 8.5 to 12.

2. The coating substances according to Claim 1, containing
the organic binder a) in a quantity in the range of 1.0 to less than 4.0 % by weight and, preferably, 1.0 to 3.8 % by weight, and/or
the water glass and/or silica sol in a quantity in the range of 0.2 to 1.5 % by weight.

3. The coating substances according to Claim 1 or 2, **characterized in that**
the copolymers based on vinyl aromatic compounds and acrylates constitute styrene acrylate copolymers and/or the organic binder a) and water glass and/or silica sol are present in the form of a hybrid binder.

4. The coating substances according to any one of the preceding claims, containing
the at least one pigment and/or the at least one filler c) in a quantity in the range of 20 to 70 % by weight, preferably in the range of 25 to 70 % by weight and, particularly preferably, in the range of 30 to 60 % by weight.

5. The coating substances according to any one of the preceding claims, **characterized in that**
these have a pH value in the range of 8.5 to 12, preferably in the range of 9 to 11.5 or are adjusted to a pH value in the range of 8.5 to 12, preferably in the range of 9 to 11.5.

6. The coating substances according to any one of the preceding claims, further containing
d) at least one pH value adjusting agent, in particular selected from the group consisting of alkali hydroxides, alkaline earth hydroxides, ammonia, amine compounds and any mixtures thereof,
e) at least one rheological additive, in particular thickeners,
f) at least one alkyl alkoxy silane, alkyl alkoxy siloxane, water-soluble alkyl siliconate, in particular potassium methyl siliconate, monoalkyl silanetriol, dialkyl silanediol, trialkyl silanol, alkali salt of monoalkyl silanetriol, in particular potassium methyl silanetriolate and/or potassium ethyl silanetriolate, dialkyl silanediol or trialkyl silanol or any mixtures thereof, and
g) optionally, at least one chelating agent, and/or
h) optionally, at least one additive.

7. The coating substances according to Claim 6, **characterized in that**
the at least one additive h) is selected from the group consisting of at least one wetting agent and/or dispersing agent, defoamers, stabilizers, flame retardants, hydrophobing agents, matting agents, in particular precipitated silica, layered silicates, organically modified layered silicates and/or thixotropic alkyd resins, surface additives, in particular silicone surface additives, for example polyether-modified polymethyl alkyl siloxane and/or silicone polyether copolymers, buffering substances, UV absorbers, radical scavengers and mixtures of these compounds.

8. The coating substances according to Claim 6 or 7, **characterized in that**
the thickener is selected from the group consisting of polyacrylate thickeners, polyurethane thickeners, polyurea thickeners, cellulose thickeners, in particular hydroxymethyl cellulose and/or methyl cellulose, polyvinyl alcohol thickeners, polyether polyol thickeners, layered silicate thickeners, polysaccharide thickeners, in particular xanthan gum, and any mixtures thereof.

9. The coating substances according to any one of the preceding claims, **characterized in that**
these are substantially free of preservatives, preferably free of organic biocidal preservatives, particularly preferably free of in-can and/or film preservatives.

10. The coating substances according to any one of the preceding claims, **characterized in that**
the pigments are selected from the group consisting of titanium dioxide, zinc sulfide, zinc oxide, baryte, soot, iron oxide, chromium oxide, cobalt blue, phthalocyanine pigments, spinel pigments, nickel and chromium titanate and any mixture thereof.

11. The coating substances according to any one of the preceding claims, **characterized in that**
the fillers are selected from the group consisting of silicates, carbonates, fluorspar, sulfates and oxides.

12. The coating substances according to any one of the preceding claims, **characterized in that**
the water glass is selected from the group consisting of sodium water glass, potassium water glass, lithium water glass and any mixtures thereof.

13. The coating substances according to any one of the preceding claims, containing
i) 0.5 to less than 4.0 % by weight, in particular 1.0 to 3.8 % by weight, of polymer dispersion,
ii) 0 to 20 % by weight, in particular 2.0 to 15 % by weight, of pigments,
iii) 15 to 70 % by weight, in particular 20 to 65 % by weight, of fillers,
iv) 0.1 to 2.0 % by weight, in particular 0.2 to 1.25 % by weight, of water glass, and
v) proportions of water made up to 100 % by weight.

14. The coating substances according to any one of the preceding claims, **characterized in that**
these constitute an exterior or interior paint.

15. The coating substances according to any one of Claims 6 to 14, **characterized in that** the pH adjusting means has a pKa value of greater than or equal to 9.0. in particular greater than or equal to 10, and/or the dispersing agent comprises or constitutes at least one amino alcohol.

16. A coat of paint, in particular a dispersion coat of paint, on a substrate surface, obtained or obtainable by applying the coating substances according to any one of the preceding claims on the substrate surface one or more times.

17. Use of the coating substances, in particular of the dispersion coating substances, according to any one of Claims 1 to 15 as a paint for the interior area.

## Revendications

1. Matériaux de revêtement aqueux en dispersion, contenant
a) des liants organiques se présentant sous la forme d'une dispersion aqueuse à base de copolymères d'acétate de vinyle/éthylène, de copolymères à base de vinylaromatiques et d'acrylates et/ou de copolymères à base d'acrylates purs, dans une quantité de l'ordre de 0,75 et moins de 4,0 % en poids (teneur en matières solides),
b) du verre soluble et/ou du sol de silice dans une quantité de l'ordre de 0,1 et 2,0 % en poids, en particulier entre 0,1 et 1,75 % en poids (teneur en matières solides), et
c) 15 à 70 % en poids d'au moins un pigment et/ou d'au moins une matière de charge,
lesdits matériaux de revêtement présentant une valeur pH comprise entre 8,5 et 12 ou étant réglés à une valeur pH comprise entre 8,5 et 12.

2. Matériaux de revêtement selon la revendication 1, contenant
le liant organique a) dans une quantité de l'ordre de 1,0 et moins de 4,0 % en poids et préférentiellement entre 1,0 et 3,8 % en poids et/ou
le verre soluble et/ou le sol de silice dans une quantité de l'ordre de 0,2 et 1,5 % en poids.

3. Matériaux de revêtement selon la revendication 1 ou la revendication 2, **caractérisés en ce que**
les copolymères à base de vinylaromatiques et d'acrylates constituent des copolymères styrène-acrylate et/ou **en ce que** le liant organique a) et le verre soluble et/ou le sol de silice se présentent sous la forme d'un liant hybride.

4. Matériaux de revêtement selon l'une quelconque des revendications précédentes, contenant
ledit au moins un pigment et/ou ladite au moins une matière de charge c) dans une quantité de l'ordre de 20 et 70 % en poids, préférentiellement entre 25 et 70 % en poids et particulièrement préférée entre 30 et 60 % en poids.

5. Matériaux de revêtement selon l'une quelconque des revendications précédentes, **caractérisés en ce que**
ceux-ci présentent une valeur pH comprise entre 8,5 et 12, préférentiellement entre 9 et 11,5, ou sont réglés à une valeur pH comprise entre 8,5 et 12, préférentiellement entre 9 et 11,5.

6. Matériaux de revêtement selon l'une quelconque des revendications précédentes, contenant également
d) au moins un moyen de réglage de pH, en particulier sélectionné dans le groupe comprenant hydroxydes alcalins, hydroxydes alcalino-terreux, ammoniac, composés aminés et mélanges quelconques de ceux-ci,
e) au moins un additif rhéologique, en particulier des épaississants,
f) au moins un alkylalcoxysilane, alkylalcoxysiloxane, siliconate d'alkyle soluble dans l'eau, en particulier siliconate de méthyle de potassium, monoalkyle-silanetriol, dialkyle-silanediol, trialkyle-silanol, sel alcalin de monoalkyle-silanetriol, en particulier silanetriolate de méthyle de potassium et/ou silanetriolate d'éthyle de potassium, dialkyle-silanediol ou trialkyle-silanol ou mélanges quelconques de ceux-ci, et
g) le cas échéant au moins un agent de chélation et/ou
h) le cas échéant au moins un additif.

7. Matériaux de revêtement selon la revendication 6, **caractérisés en ce que** ledit au moins un additif h) est sélectionné dans le groupe comprenant au moins un agent réticulant et/ou dispersant, des agents antimousse, stabilisateurs, ignifuges, hydrofuges, agents de matité, en particulier silices de précipitation, silicates lamellaires, silicates lamellaires organiquement modifiés et/ou résines alkydes thixotropes, additifs de surface, en particulier additifs de surface silicone, tels que polyméthylalkylsiloxane modifié par un polyéther et/ou copolymères silicone-polyéther, agents tampons, absorbeurs UV, piégeurs de radicaux et mélanges de ces composés.

8. Matériaux de revêtement selon la revendication 6 ou la revendication 7, **caractérisés en ce que**
l'épaississant est sélectionné dans le groupe comprenant épaississants polyacrylates, épaississants polyuréthanes, épaississants polyurés, épaississants cellulosiques, en particulier hydroxyméthylcellulose et/ou méthylcellulose, épaississants à alcool polyvinylique, épaississants polyétherpolyols, épaississants à silicate lamellaire, épaississants polysaccharides, en particulier xanthane, et des mélanges quelconques de ceux-ci.

9. Matériaux de revêtement selon l'une quelconque des revendications précédentes, **caractérisés en ce que**
ceux-ci sont sensiblement exempts d'agents conservateurs, préférentiellement exempts d'agents conservateurs organiques biocides, particulièrement préférée exempts d'agents conservateurs pour le stockage en pot et/ou pour films.

10. Matériaux de revêtement selon l'une quelconque des revendications précédentes, **caractérisés en ce que**
les pigments sont sélectionnés dans le groupe comprenant dioxyde de titane, sulfure de zinc, oxyde de zinc, baryte, noir de carbone, oxyde de fer, oxyde de chrome, bleu de cobalt, pigments de phtalocyanine, pigments de spinelle, titanate de nickel et de chrome ainsi qu'un mélange quelconque de ceux-ci.

11. Matériaux de revêtement selon l'une quelconque des revendications précédentes, **caractérisés en ce que**
les matières de charge sont sélectionnées dans le groupe comprenant des silicates, des carbonates, de la fluorite, des sulfates et des oxydes.

12. Matériaux de revêtement selon l'une quelconque des revendications précédentes, **caractérisés en ce que**
le verre soluble est sélectionné dans le groupe comprenant verre soluble au sodium, verre soluble au potassium, verre soluble au lithium et des mélanges quelconques de ceux-ci.

13. Matériaux de revêtement selon l'une quelconque des revendications précédentes, contenant
i) entre 0,5 et moins de 4,0 % en poids, en particulier entre 1,0 et 3,8 % en poids d'une dispersion polymère,
ii) entre 0 et 20 % en poids, en particulier entre 2,0 et 15 % en poids de pigments,
iii) entre 15 et 70 % en poids, en particulier entre 20 et 65 % en poids de matières de charge,
iv) entre 0,1 et 2,0 % en poids, en particulier entre 0,2 et 1,25 % en poids de verre soluble, et
v) et de l'eau pour compléter à 100 % en poids.

14. Matériaux de revêtement selon l'une quelconque des revendications précédentes, **caractérisés en ce que**
ceux-ci constituent une peinture pour façade ou une peinture intérieure.

15. Matériaux de revêtement selon l'une quelconque des revendications 6 à 14, **caractérisés en ce que**
le moyen de réglage de pH présente une valeur pKs supérieure ou égale à 9,0, en particulier supérieure ou égale à 10, et/ou **en ce que** l'agent dispersant comprend ou constitue au moins un aminoalcool.

16. Peinture, en particulier peinture à dispersion, sur une surface de substrat, obtenue ou obtenable par une ou plusieurs applications sur la surface de substrat des matériaux de revêtement selon l'une quelconque des revendications précédentes.

17. Utilisation des matériaux de revêtement, en particulier des matériaux de revêtement en dispersion selon l'une quelconque des revendications 1 à 15, pour un espace intérieur.
